# EUROPÄISCHE PATENTSCHRIFT

(11) **EP 4 150 227 B1**
(45) Veröffentlichungstag und Bekanntmachung des Hinweises auf die Patenterteilung: **12.03.2025**
(21) Anmeldenummer: 21722756.0
(22) Anmeldetag: 12.04.2021
(51) Int. Cl.: F16D 13/64

(54) **MEHRSCHEIBENKUPPLUNGSANORDNUNG MIT VONEINANDER UNABHÄNGIG WIRKENDEN FEDERBLECHEINHEITEN ZUR ANBINDUNG ZWEIER TEILSCHEIBEN AN EINER ABTRIEBSWELLE**
MULTI-DISC CLUTCH ASSEMBLY HAVING INDEPENDENTLY ACTING SPRING PLATE UNITS FOR CONNECTING TWO COMPONENT DISCS TO AN OUTPUT SHAFT
ENSEMBLE D'EMBRAYAGE MULTIDISQUES AYANT DES UNITÉS DE PLAQUE DE RESSORT À ACTION INDÉPENDANTE POUR RELIER DEUX DISQUES DE COMPOSANT À UN ARBRE DE SORTIE

(30) Priorität: 11.05.2020 DE 102020112616
(43) Veröffentlichungstag der Anmeldung: 22.03.2023
(73) Patentinhaber: Schaeffler Technologies AG & Co. KG, 91074 Herzogenaurach (DE)
(72) Erfinder: REUTER, Björn, 77815 Bühl (DE); VOIT, Alexander, 76547 Sinzheim (DE)
(86) Internationale Anmeldenummer: PCT/DE2021/100329
(87) Internationale Veröffentlichungsnummer: WO 2021/228303

(56) Entgegenhaltungen:
- EP-A1- 1 852 621
- CA-A- 1 012 475
- DE-A1- 102016 210 521
- DE-A1- 19 727 798
- DE-A1- 19 963 023
- DE-A1- 2 363 692
- GB-A- 2 055 997

## Beschreibung

Die Erfindung betrifft eine Mehrscheibenkupplungsanordnung gemäß dem Oberbegriff des Anspruchs 1 für einen (vorzugsweise hybriden) Kraftfahrzeugantriebsstrang, weiter bevorzugt unter Ausbildung einer Trennkupplung zum Einsatz in einem Hybridmodul.

Mehrscheibenkupplungsanordnungen werden zumeist eingesetzt, wenn bei radial kleinen Bauräumen hohe Drehmomente zu übertragen sind. Dabei sind meist zwei oder mehr als zwei Teilscheiben über axial weiche Bleche direkt mit einer Nabe verbunden. Die Nabe sitzt weiter auf einer Abtriebswelle. Beim Schließen der Kupplung ermöglichen die axial weichen Bleche eine axiale Verschiebbarkeit der Teilscheiben zueinander, ohne dass eine ungewünscht hohe Menge an Anpresskraft verloren geht. Durch die bisher umgesetzte Profilverzahnung zwischen der Nabe und der Abtriebswelle ist die Nabe üblicherweise axial verschiebbar auf der Abtriebswelle, d. h. beim Öffnen und Schließen der Kupplung kann sich die Nabe und damit die Kupplungsscheibe geringfügig verschieben. Diese Verschiebbarkeit der Nabe ist auch wichtig für den Freigang der Kupplungsscheibe und damit für ein möglichst geringes Schleppmoment. In gewissen Fällen, bspw. bei einer Mangelschmierung oder bei Auftreten von Korrosion oder Schmutz in der Profilverzahnung, wird die Verschiebbarkeit der Nabe jedoch gehemmt. Die Folgen können ein erhöhtes Schleppmoment bei geöffneter Kupplung sowie ein Verlust der effektiven Anpresskraft und damit ein geringeres übertragbares Drehmoment bei geschlossener Kupplung sein.

Eine Mehrscheibenkupplungsanordnung, die auf den Oberbegriff des Anspruchs 1 lesbar ist, ist aus der DE 10 2016 210521 A1 bekannt.

Es ist Aufgabe der vorliegenden Erfindung, eine Mehrscheibenkupplungsanordnung zur Verfügung zu stellen, die auch bei den im Betrieb üblicherweise auftretenden Verschleißbedingungen über die gesamte Lebensdauer hinweg eine möglichst gleichbleibende Schließkraft aufweist.

Dies wird erfindungsgemäß durch den Anspruch 1 gelöst. Die hiermit beanspruchte Mehrscheibenkupplungsanordnung ist für einen Kraftfahrzeugantriebsstrang ausgebildet und mit einer Druckplatte, einer relativ zu der Druckplatte axial verschiebbaren Anpressplatte, einer axial zwischen der Druckplatte und der Anpressplatte angeordneten, ebenfalls relativ zur Druckplatte axial verschiebbaren Zwischenplatte, und einer zwei Teilscheiben aufweisenden Kupplungsscheibe ausgestattet, wobei eine erste Teilscheibe axial zwischen der Druckplatte und der Zwischenplatte angeordnet ist und eine zweite Teilscheibe axial zwischen der Zwischenplatte und der Anpressplatte angeordnet ist, wobei jede Teilscheibe eine axial federnde Federblecheinheit sowie zumindest einen mit der Federblecheinheit verbundenen Reibbelag aufweist, und wobei die voneinander unabhängig wirkenden Federblecheinheiten unmittelbar an einer (gemeinsamen) Abtriebswelle befestigt sind.

Somit wird eine Kupplungsscheibe zur Verfügung gestellt, die unmittelbar an einer Abtriebswelle, unter Einsparung einer separaten Nabe, angeordnet ist. Dadurch entfällt die bisherige Schnittstelle zwischen Reibbelagträgern und Nabe, wodurch die Teilscheiben der Kupplungsscheibe stets eine definierte (axiale) Position (zur Abtriebswelle) einnehmen. Dies bewirkt eine bessere Regelbarkeit der Kupplung durch einen definierten Kraft- / Wegverlauf. Dadurch ergeben sich insbesondere Verbesserungen hinsichtlich des Schleppmomentes. Ein weiterer Vorteil besteht darin, dass durch die Einsparung der Nabe ein geringerer Platzbedarf besteht. Zudem wird der Herstellaufwand der Mehrscheibenkupplungsanordnung durch das Einsparen der Nabe reduziert.

Weitergehende vorteilhafte Ausführungsformen sind mit den Unteransprüchen beansprucht und nachfolgend näher erläutert.

Demnach ist es auch von Vorteil, wenn die Abtriebswelle über ein Wälzlager an einem die Druckplatte aufnehmenden oder ausbildenden Kupplungsgehäuse abgestützt ist. Dadurch wird der Aufbau der Mehrscheibenkupplungsanordnung möglichst einfach gehalten.

Diesbezüglich ist weiterhin zweckmäßig, wenn die Abtriebswelle axial beabstandet zu einem mit den Federblecheinheiten gekoppelten Anbringbereich eine Verbindungskontur, vorzugsweise in Form einer Kerbverzahnung, aufweist. Diese Verbindungskontur dient auf typische Weise unmittelbar zum formschlüssigen Verbinden mit weiteren Rädern oder Wellen des Antriebsstranges. Dadurch ist die Abtriebswelle möglichst kompakt ausgebildet.

Ist jede Federblecheinheit über eine Vernietung an einem Flanschbereich der Abtriebswelle befestigt, sind die Federblecheinheiten möglichst einfach an der Abtriebswelle montierbar.

In diesem Zusammenhang ist es auch von Vorteil, wenn die Federblecheinheiten entweder von einer gemeinsamen axialen Seite her an dem Flanschbereich angelegt / abgestützt / befestigt sind, wodurch die Montage vereinfacht wird, oder alternativ voneinander entgegengesetzten axialen Seiten an dem Flanschbereich angelegt / abgestützt / befestigt sind, wodurch die Entkoppelung der beiden Federblecheinheiten voneinander erleichtert wird.

Zudem ist es vorteilhaft, wenn die Federblecheinheit der zweiten Teilscheibe zum Umsetzen eines größeren axialen Federweges als die Federblecheinheit der ersten Teilscheibe ausgebildet ist. Dadurch wird das Schleppmoment weiter reduziert. Der Vollständigkeit halber sei darauf hingewiesen, dass der größere Axialweg der zweiten Teilscheibe sich daher ergibt, dass die Kupplung von Seiten der Anpressplatte her geschlossen wird, während die Druckplatte steht. Zudem macht die Zwischenplatte nur ungefähr den halben Verfahrweg der Anpressplatte. Wegen der Kinematik hat die zweite Teilscheibe somit einen größeren Federweg als die erste Teilscheibe.

In diesem Zusammenhang hat es sich weiterhin als zweckmäßig herausgestellt, wenn eine Stützscheibe vorhanden ist, die derart ausgeformt und angeordnet ist, dass sie für zumindest eine Federblecheinheit, vorzugswiese die Federblecheinheit der zweiten Teilscheibe, als Endanschlag dient. Dadurch kann die zweite Teilscheibe ihre axiale Ausgangsstellung verlässlich wieder einnehmen.

Die Stützscheibe weist bevorzugt eine Dicke von mindestens 1 mm auf. Dadurch ist die Stützscheibe besonders robust ausgebildet. Dabei ist es zudem vorteilhaft, wenn die Stützscheibe durch eine ringförmige Sicke verstärkt ist. Weiter bevorzugt weist die Stützscheibe zusätzlich an ihrem radialen am Außendurchmesser einen versteifenden Kragen auf

Die Federblecheinheit der ersten Teilscheibe ist direkt mit zumindest einem Reibbelag verbunden und die Federblecheinheit der zweiten Teilscheibe ist über eine Abstandsbolzenverbindung mit zumindest einem Reibbelag verbunden. Dadurch werden die Federblecheinheiten möglichst direkt mit den Reibbelägen gekoppelt.

Diesbezüglich ist es wiederum vorteilhaft, wenn mehrere Bolzen / Abstandsbolzen der Abstandsbolzenverbindung die Federblecheinheit der ersten Teilscheibe axial durchgreifen / durchdringen. Dadurch kann der Abstand der beiden Teilscheiben zueinander auf einfache Weise eingestellt werden.

Weist die Federblecheinheit der zweiten Teilscheibe mehrere aufeinandergelegte Einzelbleche, die eine gleiche Dicke aufweisen, auf, wird die Herstellung dieser Federblecheinheit weiter vereinfacht.

Des Weiteren ist es von Vorteil, wenn die Federblecheinheit der zweiten Teilscheibe zwei Blechpakete aufweist, die jeweils eine sich in Umfangsrichtung ändernde Geometrie / Außenkontur aufweisen, wobei die beiden Blechpakete in der Umfangsrichtung gesehen (vorzugsweise um 45°) relativ zueinander verdreht angeordnet sind. Die sich ändernde geometrische Beschaffenheit besteht vorzugsweise darin, dass eine vorhandene Anbindungsstelle mit dem Bolzen der Abstandsbolzenverbindung eines ersten Blechpaketes in Umfangsrichtung (vorzugsweise um 45°) verdreht / versetzt zu einer Anbindungsstelle mit dem Bolzen der Abstandsbolzenverbindung eines zweiten Blechpaketes ist. Dadurch ergibt sich eine möglichst geschickte axiale Verschachtelung der beiden Blechpakete. Zudem ist es vorteilhaft, wenn die Einzelbleche desselben Blechpaketes gleich dick ausgebildet sind. Weiter bevorzugt sind die Einzelbleche der beiden Blechpakete auch identisch / als Gleichteile ausgebildet, sodass beide Blechpakete identisch sind.

Vorteilhaft ist es auch, wenn die Federblecheinheit der ersten Teilscheibe zwei aufeinander gelegte Einzelbleche aufweist, welche Einzelbleche in einem radialen Außenumfangsbereich unter Umsetzung einer Belagsfederung (unmittelbar) gewellt ausgeformt sind. Durch diese äußere Wellung ist es insbesondere möglich eine Belagfederung zu integrieren. Dadurch wird eine bessere Flächenpressungsverteilung / ein besseres Tragbild zwischen den Reibbelägen und der Druck- / Zwischenplatte sichergestellt.

Weiter bevorzugt ist auch die zweite Teilscheibe mit einer Belagfederung ausgestattet. Dabei ist es vorteilhaft, wenn ein Träger / Belagträger der zweiten Teilscheibe unmittelbar (zu seiner radialen Außenseite hin) unter Umsetzung der Belagsfederung gewellt ausgeformt ist. Dadurch wird wiederum die Flächenpressungsverteilung und damit ein Tragbild der Reibbeläge weiter verbessert.

Mit anderen Worten ausgedrückt, ist somit erfindungsgemäß eine axialweiche Mehrscheibenkupplungsscheibe mit besonders dünnen Blechen / Einzelblechen zur direkten Anbindung mit unabhängigen Federblecheinheiten realisiert. Die Belageinheiten (ein Belag oder mehrere Beläge) der einzelnen (beiden) Teilkupplungsscheiben sind spielfrei über (zwei) unabhängige axial weiche Federblecheinheiten direkt mit der Abtriebswelle verbunden.

Die Erfindung wird nun nachfolgend anhand von Figuren näher erläutert.

Es zeigen:
- Fig. 1: eine Längsschnittdarstellung einer erfindungsgemäßen Mehrscheibenkupplungsanordnung nach einem bevorzugten Ausführungsbeispiel, womit eine Anbindung zweier Teilscheiben an eine Abtriebswelle gut zu erkennen ist,
- Fig. 2: eine Längsschnittdarstellung einer die Abtriebswelle und die beiden Teilscheiben aufweisenden, in Fig. 1 eingesetzten Kupplungsscheibe,
- Fig. 3: eine Detailansicht des in Fig. 2 mit "III" gekennzeichneten Bereiches, womit der Aufbau der beiden Teilscheiben gezeigt ist,
- Fig. 4: eine Rückansicht der Kupplungsscheibe nach Fig. 2 mit einem, den Längsschnitt nach Fig. 2 anhand einer mit "II-II" gekennzeichneten Schnittlinie darstellenden Schnittverlaufs,
- Fig. 5: eine Vorderansicht der Kupplungsscheibe nach Fig. 2,
- Fig. 6: eine Explosionsdarstellung der in den Fign. 1 bis 5 zu erkennenden Kupplungsscheibe, sowie
- Fig. 7: eine Vorderansicht einer in einer (zweiten) Teilscheibe der Kupplungsscheibe eingesetzten (zweiten) Federblecheinheit aufweisend zwei in Umfangsrichtung verdreht zueinander angeordnete Blechpakete.

Die Figuren sind lediglich schematischer Natur und dienen ausschließlich dem Verständnis der Erfindung. Die gleichen Elemente sind mit denselben Bezugszeichen versehen.

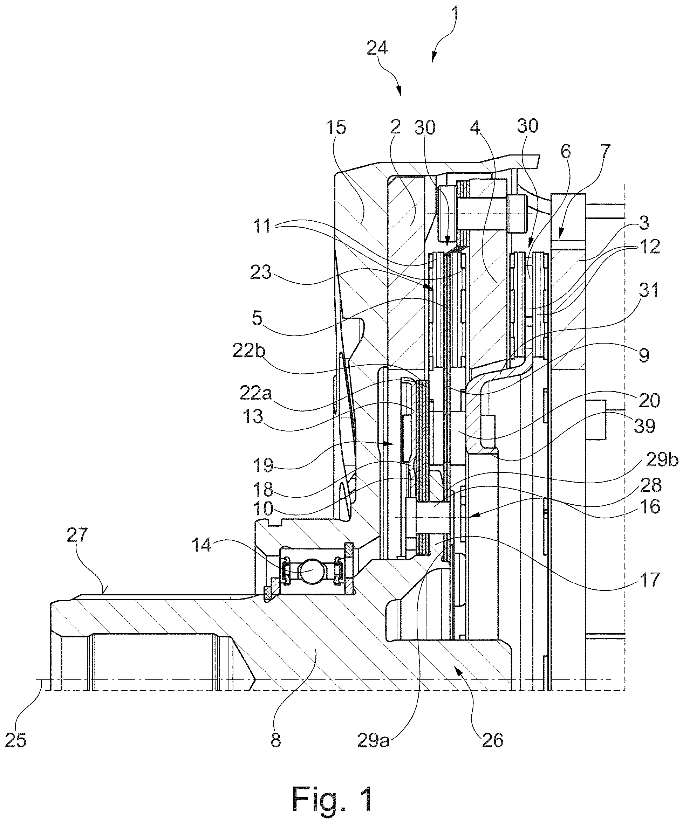

Mit Fig. 1 ist zunächst ein prinzipieller Aufbau einer erfindungsgemäßen Mehrscheibenkupplungsanordnung 1 nach einem bevorzugten Ausführungsbeispiel veranschaulicht. Die Mehrscheibenkupplungsanordnung 1 ist in ihrem Betrieb bevorzugt in einem hybriden Kraftfahrzeugantriebsstrang, nämlich in einem Hybridmodul eingesetzt. Die Mehrscheibenkupplungsanordnung 1 dient dabei vorzugsweise als eine Trennkupplung, sprich als eine Kupplung zum An- bzw. Abkoppeln der elektrischen Maschine von einer Verbrennungskraftmaschine oder von einem weiteren Antriebsstrang. Die Mehrscheibenkupplungsanordnung 1 dient daher bevorzugt entweder zum Einsatz zwischen einem Rotor der elektrischen Maschine und einer Ausgangswelle der Verbrennungskraftmaschine oder zwischen einem Rotor der elektrischen Maschine und einer Getriebeeinheit des Antriebsstrangs.

Die als Zweischeibenkupplung ausgebildete Mehrscheibenkupplungsanordnung 1 weist auf übliche Weise einen ersten Kupplungsbestandteil 24 mit einer gehäusefesten Druckplatte 2, einer dazu entlang einer zentralen Drehachse 25 beabstandeten Anpressplatte 3, einer axial zwischen der Druckplatte 2 und der Anpressplatte 3 angeordneten Zwischenplatte 4 sowie ein die Druckplatte 2 aufnehmendes Kupplungsgehäuse 15 auf.

In diesem Zusammenhang sei darauf hingewiesen, dass die gegenständlich verwendeten Richtungsangaben auf die Drehachse 25 bezogen sind. Demnach ist axial / axiale Richtung eine Richtung entlang der Drehachse 25, radial / radiale Richtung eine Richtung senkrecht zur Drehachse 25 und Umfangsrichtung eine Richtung entlang einer konzentrisch um die Drehachse 25 herum verlaufenden Kreislinie.

Ein zweiter Kupplungsbestandteil 26 der Mehrscheibenkupplungsanordnung 1 weist eine doppelte / zweifache Kupplungsscheibe 7 auf, die mit einer ersten Teilscheibe 5 in den axialen Zwischenbereich zwischen der Druckplatte 2 und der Zwischenplatte 4 und mit einer zweiten Teilscheibe 6 in den axialen Zwischenbereich zwischen der Anpressplatte 3 und der Zwischenplatte 4 hineinragt. Insbesondere befinden sich Reibbeläge 11, 12 der jeweiligen Teilscheibe 5, 6 in radialer Richtung auf Höhe der Platten 2, 3, 4. In einer geschlossenen Stellung sind die Platten 2, 3, 4 derart mittels einer der Übersichtlichkeit halber nicht dargestellten Betätigungseinrichtung axial zusammengedrückt, dass die Teilscheiben 5, 6 reibkraftschlüssig mit diesen Platten 2, 3, 4 verbunden sind. In einer geöffneten Stellung der Mehrscheibenkupplungsanordnung 1 bildet sich ein Luftspalt zwischen den Platten 2, 3, 4 und der jeweiligen Teilscheibe 5, 6, sodass die Teilscheiben 5, 6 frei relativ zu den Platten 2, 3, 4 verdrehbar sind.

Mit den Fign. 1 bis 3 ist eine erfindungsgemäße Anbindung der beiden Teilscheiben 5, 6 seitens einer Abtriebswelle 8 gut zu erkennen. Die Teilscheiben 5, 6 weisen jeweils eine Federblecheinheit 9, 10 auf, welche axial federnd umgesetzt ist. Eine (erste) Federblecheinheit 9 der ersten Teilscheibe 5 sowie eine (zweite) Federblecheinheit 10 der zweiten Teilscheibe 6 sind unabhängig voneinander wirkend ausgebildet. Erfindungsgemäß sind diese Federblecheinheiten 9, 10 direkt mit der Abtriebswelle 8 der Mehrscheibenkupplungsanordnung 1 drehfest verbunden. Jene Abtriebswelle 8 ist eine entlang der Drehachse 25 verlaufende Welle, die im Betrieb mit einer Kurbelwelle der Verbrennungskraftmaschine oder mit einem Getriebeeingang der Getriebeeinheit weiter verbunden ist. Die Abtriebswelle 8 weist zum Verbinden mit dem entsprechenden Bestandteil axial versetzt zu den Teilscheiben 5, 6 eine Kerbverzahnung 27 auf.

Die Abtriebswelle 8 bildet axial beabstandet zu der Kerbverzahnung 27 einen Flanschbereich 17 aus, an dem die Federblecheinheiten 9, 10 befestigt sind. Die Abtriebswelle 8 ist zudem über ein Wälzlager 14 direkt relativ zu dem Kupplungsgehäuse 15 verdrehbar abgestützt. Das Wälzlager 14 ist axial zwischen der Kerbverzahnung 27 und dem Flanschbereich 17 positioniert.

**In** dieser Ausführung ist die erste Federblecheinheit 9 an einer ersten axialen Seite des scheibenförmigen / radial abstehenden Flanschbereiches 17 angelegt / befestigt und die zweite Federblecheinheit 10 zu einer der ersten axialen Seite abgewandten zweiten axialen Seite des Flanschbereiches 17 angelegt / befestigt.

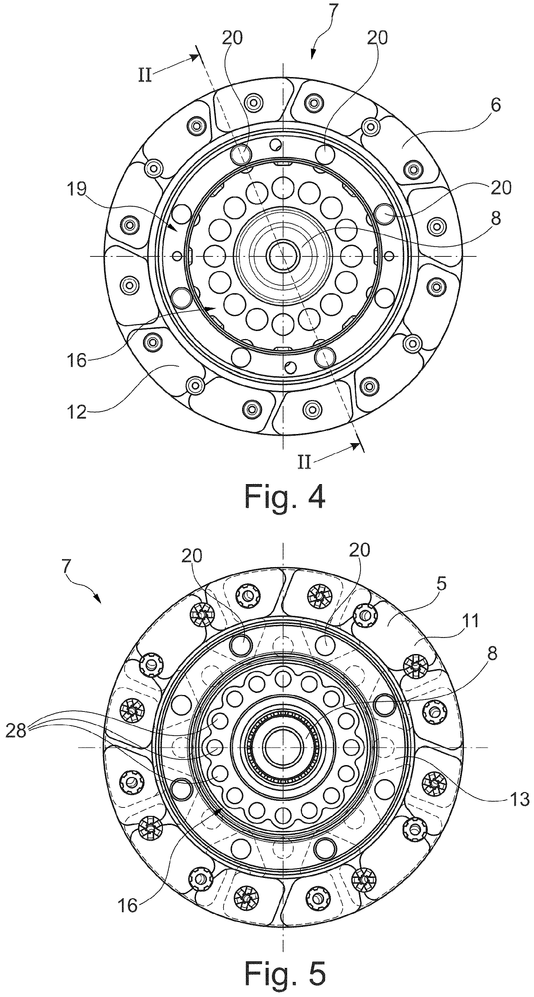

Zur Befestigung der beiden Federblecheinheiten 9, 10 dient eine Vernietung 16, die mehrere in Umfangsrichtung verteilt angeordnete einzelne Niete 28 umfasst. Diese Vernietung 16 ist mit den Fign. 4 bis 6 gut zu erkennen. Von dem Flanschbereich 17 aus erstrecken sich die Federblecheinheiten 9, 10 jeweils in radialer Richtung nach außen und sind in einem radial zu dem Flanschbereich 17 beabstandeten Bereich mit Reibbelägen 11, 12 weiter verbunden.

Hinsichtlich der ersten Teilscheibe 5 ist erkennbar, dass die erste Federblecheinheit 9 ausschließlich aus axial übereinander gelegten Einzelblechen 29a, 29b gebildet ist. Die beiden in dieser Ausführung verwendeten Einzelbleche 29a, 29b weisen relativ zueinander eine gleiche Dicke auf. Zu einer radialen Außenumfangsseite 30 der ersten Federblecheinheit 9 sind zu je einer axialen Seite der ersten Federblecheinheit 9 hin (erste) Reibbeläge 11 angeordnet. Hierzu ist in Verbindung mit Fig. 4 zu erkennen, dass diese ersten Reibbeläge 11 auf übliche Weise, nämlich ringförmig realisiert sind. Zudem sind die Einzelbleche 29a, 29b in einem radialen Außenumfangsbereich unter Umsetzung einer Belagsfederung 23 gewellt ausgeformt.

Auch die zweite Federblecheinheit 10 ist zu ihrer radialen Außenumfangsseite 30 mit zwei (zweiten) Reibbelägen 12 versehen. Die zweiten Reibbeläge 12 sind hierbei axial versetzt zu dem Flanschbereich 17. Zur Koppelung der zweiten Federblecheinheit 10 mit den zweiten Reibbelägen 12 ist eine Abstandsbolzenverbindung 19 vorgesehen.

Die Abstandsbolzenverbindung 19 weist mehrere in Umfangsrichtung verteilt angeordnete Bolzen 20 auf, die einen die zweiten Reibbeläge 12 direkt aufnehmenden Träger 31 mit der zweiten Federblecheinheit 10 verbinden.

Es ist zudem ersichtlich, dass der Träger 31 topfförmig ist. Der Träger 31 weist an seinem radialen Innendurchmesser einen axial verlaufenden Kragen 39 zur zusätzlichen Versteifung auf.

Es sei zudem erwähnt, dass in weiteren erfindungsgemäßen Ausführungen eine Belagsfederung auch für die zweite Teilscheibe 6 umgesetzt ist. Vorzugsweise ist dann der Träger 31 an seinem radialen Außendurchmesser gewellt, ähnlich zu der ersten Teilscheibe 5 im vorliegenden Ausführungsbeispiel der Fig. 1.

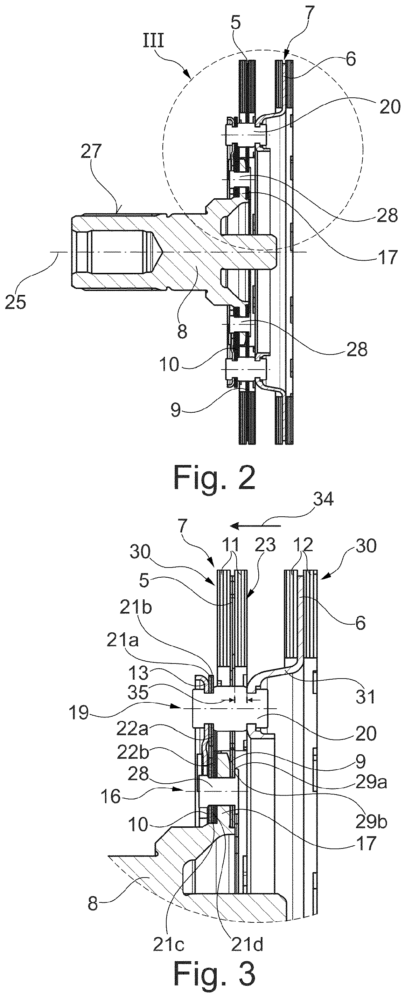

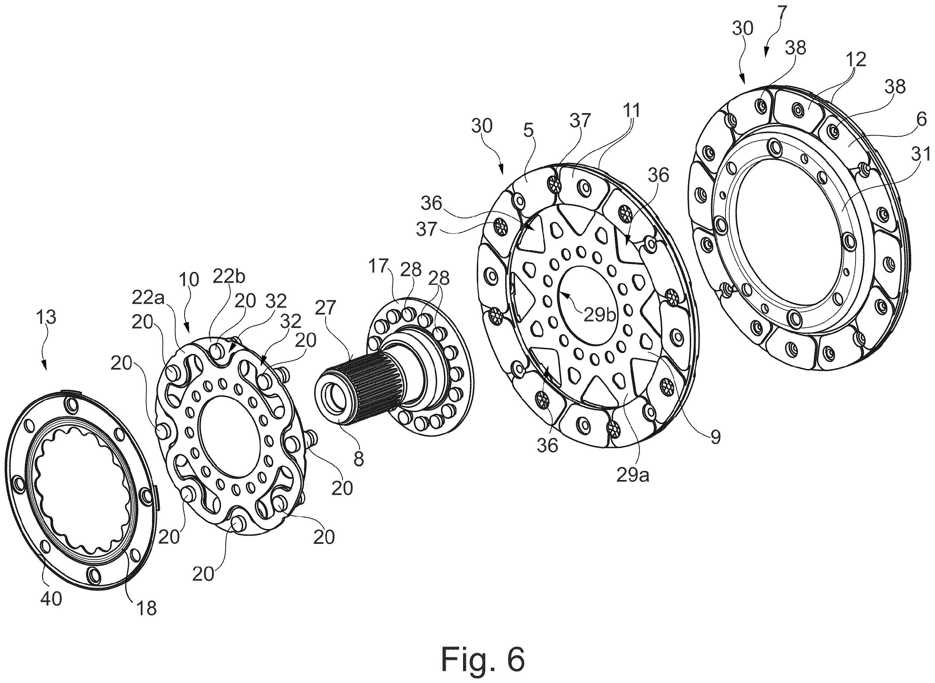

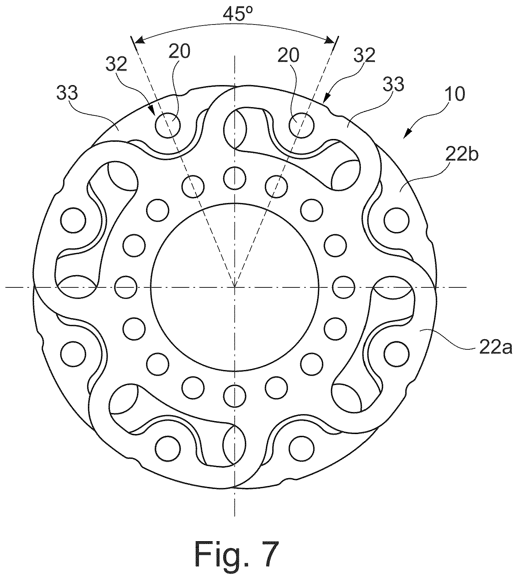

Die zweite Federblecheinheit 10, wie in Verbindung mit den Fign. 6 und 7 gut zu erkennen, weist im Wesentlichen zwei Blechpakete 22a, 22b auf. Jedes Blechpaket 22a, 22b weist weiterhin zwei Einzelbleche 21a, 21b oder 21c, 21d auf (Fig. 3), wobei die beiden Einzelbleche 21a, 21b oder 21c, 21d eines Blechpaketes 22a, 22b gleich dick realisiert sind.

Jedes Blechpaket 22a, 22b kann gemäß weiteren erfindungsgemäßen Ausführungen auch aus mehr als zwei Einzelblechen 21a, 21b; 21c, 21d bestehen. In einer weiter bevorzugten Ausführung sind es vorzugsweise drei Einzelbleche je Blechpaket 22a, 22b oder zumindest für das erste Blechpaket 22a oder das zweite Blechpaket 22b. Man sollte möglichst viele dünne Bleche verwendet, anstatt z.B. ein dickes Blech, da dadurch die Blechpakete 22a, 22b axial deutlich weicher werden.

Zudem sind weiter bevorzugt die Einzelbleche 21a, 21b; 21c, 21d beider Blechpakete 22a, 22b identisch.

Die beiden Blechpakete 22a, 22b sind gemäß Fig. 7 in Umfangsrichtung um 45° verdreht / versetzt zueinander angeordnet. Jedes erste Blechpaket 22a ist mit einer ersten Gruppe an Bolzen 20 verbunden und jedes zweite Blechpaket 22b ist mit einer zweiten Gruppe an Bolzen 20 verbunden. Die Bolzen 20 der verschiedenen Gruppen sind in Umfangsrichtung wechselweise angeordnet. Somit ist eine einen Bolzen 20 der ersten Gruppe aufnehmende Anbindungsstelle 32 des ersten Blechpaketes 22a relativ zu einer einen Bolzen 20 der zweiten Gruppe aufnehmenden Anbindungsstelle 32 des zweiten Blechpaketes 22b verdreht angeordnet. Die beiden Blechpakete 22a, 22b sind im Wesentlichen mit einer gleichen Außenkontur versehen. Beide Blechpakete 22a, 22b weisen mehrere, jeweils eine Anbindungsstelle 32 ausbildende, federnde sowie in Umfangsrichtung verlaufende Stegbereiche 33 (/ Ösenbereiche / Schlaufenbereiche) auf, in deren umfangsseitiger Mitte der jeweilige Bolzen 20 angebracht ist.

Mit Fig. 6 ist zudem dargestellt, dass in der zweiten Federblecheinheit 10 zusätzlich eine Stützscheibe 13 vorhanden ist. eine Stützscheibe (13) vorhanden ist, die derart ausgeformt und angeordnet ist, Diese Stützscheibe 13 ist prinzipiell derart ausgeformt und angeordnet / angebracht, dass sie für die zweite Federblecheinheit 10 in der geöffneten Stellung der Mehrscheibenkupplungsanordnung 1 als Endanschlag dient.

Insbesondere ist die Stützscheibe 13 mit einer Materialdicke von ≥ 1 mm ausgestattet und weist vorzugsweise eine ringförmig verlaufende Sicke 18 auf (Fig. 6). Auch weist die Stützscheibe 13 an ihrem radialen Außendurchmesser zusätzlich einen versteifenden Kragen 40 auf.

Die Stützscheibe 13 ist über die Bolzen 20 unmittelbar an dem ersten Blechpaket 22a mit festgelegt. Auch ist die Stützscheibe 13 mit dem zweiten Blechpaket 22b über Abstandsbolzen 20 verbunden.

Im gezeigten Ausführungsbeispiel sind die Durchmesser (insbesondere Innendurchmesser) der beiden Reibbeläge 11 und 12 aus Platzgründen unterschiedlich gestaltet. Hinsichtlich Herstellaufwand und Funktion sind in weiteren erfindungsgemäßen Ausführungen jedoch gleiche Belagsabmessungen / Durchmesser für beide Reibbeläge 11, 12 vorteilhaft. Dann sind die Reibbeläge 11, 12 vorzugsweise auch als Gleichteile umgesetzt. Dadurch entsteht auch ein identischer Reibradius bei beiden Teilscheiben 5, 6.

Des Weiteren geht mit anderen Worten aus den Figuren hervor, dass die Scheibe 7 über die Lagerung 14 mit der Abtriebswelle 8 im Gehäuse 15 der Kupplung 1 positionsfest gelagert ist. Bei einer Betätigung der Kupplung 1 wird die Anpressplatte 3 durch eine äußere Kraft in Richtung 34 verschoben und wirkt auf die rechte Teilscheibe 6 der Kupplungsscheibe 7. Zeitgleich mit der Anpressplatte 3 verschiebt sich auch die mit dieser gekoppelte Zwischenplatte 4, die auf die linke Teilscheibe 5 wirkt. Die Kupplung 1 ist geschlossen, sobald alle Lüftspalte geschlossen sind und die Teilscheiben 5, 6 anliegen. Dabei hat die rechte Teilscheibe 6 einen größeren Axialweg zurückzulegen als die linke Teilscheibe 5.

Die linke Teilscheibe 5 setzt sich aus Belageinheit 11 und Federblecheinheit 9 zusammen, wobei Belageinheit 11 aus den Reibbelägen 11 und den Belagnieten 37 besteht. Mit den Belagnieten 37 sind die Reibbeläge 11 an den Federblechen / Einzelblechen 29a, 29b angenietet.

Die rechte Teilscheibe 6 setzt sich aus Belageinheit 12, den Abstandsbolzen 20, der Stützscheibe 13 und der Federblecheinheit 10 zusammen. Die Belageinheit 12 wiederum besteht aus den Reibbelägen 12, Belagnieten 38 und dem Belagträger 31.

### Bezugszeichenliste

- 1: Mehrscheibenkupplungsanordnung
- 2: Druckplatte
- 3: Anpressplatte
- 4: Zwischenplatte
- 5: erste Teilscheibe
- 6: zweite Teilscheibe
- 7: Kupplungsscheibe
- 8: Abtriebswelle
- 9: erste Federblecheinheit
- 10: zweite Federblecheinheit
- 11: erster Reibbelag
- 12: zweiter Reibbelag
- 13: Stützscheibe
- 14: Wälzlager
- 15: Kupplungsgehäuse
- 16: Vernietung
- 17: Flanschbereich
- 18: Sicke
- 19: Abstandsbolzenverbindung
- 20: Bolzen
- 21a: erstes Einzelblech
- 21b: zweites Einzelblech
- 21c: drittes Einzelblech
- 21d: viertes Einzelblech
- 22a: erstes Blechpaket
- 22b: zweites Blechpaket
- 23: Belagsfederung
- 24: erster Kupplungsbestandteil
- 25: Drehachse
- 26: zweiter Kupplungsbestandteil
- 27: Kerbverzahnung
- 28: Niet
- 29a: erstes Einzelblech
- 29b: zweites Einzelblech
- 30: Außenumfangsseite
- 31: Träger
- 32: Anbindungsstelle
- 33: Stegbereich
- 34: Richtungspfeil
- 35: Abstand
- 36: Aussparung
- 37: erster Belagniet
- 38: zweiter Belagniet
- 39: Kragen des Trägers
- 40: Kragen der Stützscheibe

## Patentansprüche

1. Mehrscheibenkupplungsanordnung (1) für einen Kraftfahrzeugantriebsstrang, mit einer Druckplatte (2), einer relativ zu der Druckplatte (2) axial verschiebbaren Anpressplatte (3), einer axial zwischen der Druckplatte (2) und der Anpressplatte (3) angeordneten, ebenfalls relativ zu der Druckplatte (2) axial verschiebbaren Zwischenplatte (4), und einer zwei Teilscheiben (5, 6) aufweisenden Kupplungsscheibe (7), wobei eine erste Teilscheibe (5) axial zwischen der Druckplatte (2) und der Zwischenplatte (4) angeordnet ist und eine zweite Teilscheibe (6) axial zwischen der Zwischenplatte (4) und der Anpressplatte (3) angeordnet ist, wobei jede Teilscheibe (5, 6) eine axial federnde Federblecheinheit (9, 10) sowie zumindest einen mit der Federblecheinheit (9, 10) verbundenen Reibbelag (11, 12) aufweist, und wobei die voneinander unabhängig wirkenden Federblecheinheiten (9, 10) unmittelbar an einer Abtriebswelle (8) befestigt sind, **dadurch gekennzeichnet, dass** die Federblecheinheit (9) der ersten Teilscheibe (5) direkt mit zumindest einem Reibbelag (11) verbunden ist und die Federblecheinheit (10) der zweiten Teilscheibe (6) über eine Abstandsbolzenverbindung (19) mit zumindest einem Reibbelag (12) verbunden ist.

2. Mehrscheibenkupplungsanordnung (1) nach Anspruch 1, **dadurch gekennzeichnet, dass** die Abtriebswelle (8) über ein Wälzlager (14) an einem die Druckplatte (2) aufnehmenden oder ausbildenden Kupplungsgehäuse (15) abgestützt ist.

3. Mehrscheibenkupplungsanordnung (1) nach Anspruch 1 oder 2, **dadurch gekennzeichnet, dass** jede Federblecheinheit (9, 10) über eine Vernietung (16) an einem Flanschbereich (17) der Abtriebswelle (8) befestigt ist.

4. Mehrscheibenkupplungsanordnung (1) nach einem der Ansprüche 1 bis 3, **dadurch gekennzeichnet, dass** die Federblecheinheit (9) der zweiten Teilscheibe (6) zum Umsetzen eines größeren axialen Federweges als die Federblecheinheit (10) der ersten Teilscheibe (5) ausgebildet ist.

5. Mehrscheibenkupplungsanordnung (1) nach einem der Ansprüche 1 bis 4, **dadurch gekennzeichnet, dass** eine Stützscheibe (13) vorhanden ist, die derart ausgeformt und angeordnet ist, dass sie für zumindest eine Federblecheinheit (10) in einer geöffneten Stellung der Mehrscheibenkupplungsanordnung (1) als Endanschlag dient.

6. Mehrscheibenkupplungsanordnung (1) nach einem der Ansprüche 1 bis 5, **dadurch gekennzeichnet, dass** mehrere Bolzen (20) der Abstandsbolzenverbindung (19) die Federblecheinheit (9) der ersten Teilscheibe (5) axial durchgreifen.

7. Mehrscheibenkupplungsanordnung (1) nach einem der Ansprüche 1 bis 6, **dadurch gekennzeichnet, dass** die Federblecheinheit (10) der zweiten Teilscheibe (6) mehrere aufeinander gelegte Einzelbleche (21a, 21b; 21c, 21d), die eine gleiche Dicke aufweisen, aufweist.

8. Mehrscheibenkupplungsanordnung (1) nach einem der Ansprüche 1 bis 7, **dadurch gekennzeichnet, dass** die Federblecheinheit (10) der zweiten Teilscheibe (6) zwei Blechpakete (22a, 22b) aufweist, die jeweils eine sich in Umfangsrichtung ändernde Geometrie aufweisen, wobei die beiden Blechpakete (22a, 22b) in der Umfangsrichtung gesehen relativ zueinander verdreht angeordnet sind.

9. Mehrscheibenkupplungsanordnung (1) nach einem der Ansprüche 1 bis 8, **dadurch gekennzeichnet, dass** die Federblecheinheit (9) der ersten Teilscheibe (5) zwei aufeinander gelegte Einzelbleche (29a, 29b) aufweist, welche Einzelbleche (29a, 29b) in einem radialen Außenumfangsbereich unter Umsetzung einer Belagsfederung (23) gewellt ausgeformt sind.

## Claims

1. A multi-disc clutch assembly (1) for a motor vehicle drive train, having a pressure plate (2), a pressing plate (3) that is axially movable relative to the pressure plate (2), an intermediate plate (4) arranged axially between the pressure plate (2) and the pressing plate (3) and also axially movable relative to the pressure plate (2), and a clutch disc (7) having two component discs (5, 6), wherein a first component disc (5) is arranged axially between the pressure plate (2) and the intermediate plate (4) and a second component disc (6) is arranged axially between the intermediate plate (4) and the pressing plate (3), wherein each component disc (5, 6) has an axially resilient spring plate unit (9, 10) and at least one friction lining (11, 12) connected to the spring plate unit (9, 10), and wherein the independently acting spring plate units (9, 10) are fastened directly to an output shaft (8), **characterized in that** the spring plate unit (9) of the first component disc (5) is directly connected to at least one friction lining (11) and the spring plate unit (10) of the second component disc (6) is connected to at least one friction lining (12) via a spacer bolt connection (19).

2. The multi-disc clutch assembly (1) according to claim 1, **characterized in that** the output shaft (8) is supported via a roller bearing (14) on a clutch housing (15) receiving or forming the pressure plate (2).

3. The multi-disc clutch assembly (1) according to claim 1 or 2, **characterized in that** each spring plate unit (9, 10) is fastened to a flange area (17) of the output shaft (8) via a rivet (16).

4. The multi-disc clutch assembly (1) according to any one of claims 1 to 3, **characterized in that** the spring plate unit (9) of the second component disc (6) is designed for implementing a larger axial spring deflection than the spring plate unit (10) of the first component disc (5).

5. The multi-disc clutch assembly (1) according to any one of claims 1 to 4, **characterized in that** a support disc (13) is present that is shaped and arranged such that it serves as an end stop for at least one spring plate unit (10) in an open position of the multi-disc clutch assembly (1).

6. The multi-disc clutch assembly (1) according to any one of claims 1 to 5, **characterized in that** a plurality of bolts (20) of the spacer bolt connection (19) axially penetrate the spring plate unit (9) of the first component disc (5).

7. The multi-disc clutch assembly (1) according to any one of claims 1 to 6, **characterized in that** the spring plate unit (10) of the second component disc (6) has a plurality of individual plates (21a, 21b; 21c, 21d) placed on top of one another and having the same thickness.

8. The multi-disc clutch assembly (1) according to any one of claims 1 to 7, **characterized in that** the spring plate unit (10) of the second component disc (6) has two plate packages (22a, 22b), each having a geometry that changes in the circumferential direction, wherein the two plate packages (22a, 22b) are arranged rotated relative to each other when viewed in the circumferential direction.

9. The multi-disc clutch assembly (1) according to any one of claims 1 to 8, **characterized in that** the spring plate unit (9) of the first component disc (5) has two individual plates (29a, 29b) placed on top of one another, which individual plates (29a, 29b) are corrugated in a radial outer circumferential region with the implementation of a lining spring (23).

## Revendications

1. Ensemble d'embrayage multidisques (1) pour une chaîne cinématique de véhicule automobile, comportant un plateau de pression (2), un plateau de compression (3) pouvant être déplacé axialement par rapport au plateau de pression (2), et un plateau intermédiaire (4) disposé axialement entre le plateau de pression (2) et le plateau de compression (3), pouvant également être déplacé axialement par rapport au plateau de pression (2), et un disque d'embrayage (7) présentant deux disques de composant (5, 6), dans lequel un premier disque de composant (5) est disposé axialement entre le plateau de pression (2) et le plateau intermédiaire (4) et un second disque de composant (6) est disposé axialement entre le plateau intermédiaire (4) et le plateau de compression (3), dans lequel chaque disque de composant (5, 6) présente une unité de plaque de ressort (9, 10) axialement élastique ainsi qu'au moins une garniture de friction (11, 12) reliée à l'unité de plaque de ressort (9, 10), et dans lequel les unités de plaque de ressort (9, 10) agissant indépendamment l'une de l'autre sont directement fixées à un arbre de sortie (8), **caractérisé en ce que** l'unité de plaque de ressort (9) du premier disque de composant (5) est reliée directement à l'au moins une garniture de friction (11) et l'unité de plaque de ressort (10) du second disque de composant (6) est reliée, par l'intermédiaire d'une liaison par boulons d'écartement (19), à au moins une garniture de friction (12).

2. Ensemble d'embrayage multidisques (1) selon la revendication 1, **caractérisé en ce que** l'arbre de sortie (8) s'appuie par l'intermédiaire d'un palier à roulement (14) sur un carter d'embrayage (15) logeant ou formant le plateau de pression (2).

3. Ensemble d'embrayage multidisques (1) selon la revendication 1 ou 2, **caractérisé en ce que** chaque unité de plaque de ressort (9, 10) est fixée, par l'intermédiaire d'un rivet (16), à une zone de bride (17) de l'arbre de sortie (8).

4. Ensemble d'embrayage multidisques (1) selon l'une quelconque des revendications 1 à 3, **caractérisé en ce que** l'unité de plaque de ressort (9) du second disque de composant (6) est conçue pour appliquer un débattement axial supérieur à un débattement appliqué par
l'unité de plaque de ressort (10) du premier disque de composant (5).

5. Ensemble d'embrayage multidisques (1) selon l'une quelconque des revendications 1 à 4, **caractérisé en ce qu'**un disque d'appui (13) est fourni, lequel est formé et disposé de telle sorte qu'il sert de butée d'extrémité pour au moins une unité de plaque de ressort (10) dans une position ouverte de l'ensemble d'embrayage multidisques (1).

6. Ensemble d'embrayage multidisques (1) selon l'une quelconque des revendications 1 à 5, **caractérisé en ce que** plusieurs boulons (20) de la liaison par boulons d'écartement (19) viennent axialement en prise à travers l'unité de plaque de ressort (9) du premier disque de composant (5).

7. Ensemble d'embrayage multidisques (1) selon l'une quelconque des revendications 1 à 6, **caractérisé en ce que** l'unité de plaque de ressort (10) du second disque de composant (6) présente plusieurs plaques (21a, 21b ; 21c, 21d) individuelles superposées, lesquelles présentent une même épaisseur.

8. Ensemble d'embrayage multidisques (1) selon l'une quelconque des revendications 1 à 7, **caractérisé en ce que** l'unité de plaque de ressort (10) du second disque de composant (6) présente deux noyaux feuilletés (22a, 22b), lesquels présentent respectivement une géométrie changeant dans la direction circonférentielle, dans lequel les deux noyaux feuilletés (22a, 22b) sont disposés de manière à être tournés l'un par rapport à l'autre vus dans la direction circonférentielle.

9. Ensemble d'embrayage multidisques (1) selon l'une quelconque des revendications 1 à 8, **caractérisé en ce que** l'unité de plaque de ressort (9) du premier disque de composant (5) présente deux plaques (29a, 29b) individuelles superposées, lesdites plaques (29a, 29b) individuelles sont formées ondulées dans une zone périphérique extérieure radiale par application d'une suspension de garniture (23).
